# DEMANDE DE BREVET EUROPEEN

(11) **EP 0 741 251 A1**
(43) Date de publication de la demande: **06.11.1996**
(21) Numéro de dépôt: 96400926.0
(22) Date de dépôt: 30.04.1996
(51) Int. Cl.: F16B 37/08

(54) **Pièce de fixation à monter sur un goujon cranté.**

(30) Priorité: 03.05.1995 FR 9505277
(71) Demandeur: COMET, F-60300 Senlis (FR)
(72) Inventeur: Le Blaye, Gérard, 93100 Montreuil (FR)
(74) Mandataire: Rinuy, Santarelli

(57) **Abrégé**

Une pièce de fixation monobloc en matière plastique destinée à être montée sur un goujon cranté en attente (2) comprend une cage cubique (5) qui comporte deux colliers coaxiaux (9, 10) et deux mors (11) striés longitudinalement (en 14) et portés chacun par deux pattes parallèles (12, 13) élastiquement flexibles autour de quatre axes (A, B, C, D) qui définissent un parallélogramme déformable et sont constitués par des portions rétrécies des pattes. La pièce peut ainsi être montée dans les deux sens sur le goujon et être démontée par exercice de simples sollicitations axiales sur les mors.

## Description

L'invention est relative aux pièces de fixation monobloc destinées à être montées sur les tiges crantées de goujons faisant saillie sur une embase en vue de fixer sur cette embase des éléments appropriés tels que câbles, conduites, etc.

Une telle pièce est utile en particulier dans le domaine des véhicules automobiles : elle est notamment venue de moulage en matière plastique avec au moins un arceau à ouverture étranglée propre à recevoir une tuyauterie de carburant, l'embase sur laquelle les goujons sont en attente constituant alors le dessous du châssis d'un véhicule sur lequel on désire fixer ladite tuyauterie.

L'invention vise plus particulièrement, parmi les pièces du genre en question, celles qui comportent une cage délimitée par deux parois transversales et par deux parois latérales longitudinales réunissant entre elles ces deux parois transversales, l'une de ces dernières parois, destinée à être appliquée contre l'embase, formant un collier rigide à ouverture évasée vers l'extérieur, collier destiné à entourer le pied, de la tige, proche de l'embase, ladite cage contenant au moins un mors cranté rigide propre à coopérer avec les crans de la tige et porté par une patte qui le relie à l'une des parois longitudinales, ladite patte étant élastiquement flexible autour d'un axe d'articulation perpendiculaire à l'axe du collier et constitué par une zone amincie de cette patte, de façon telle que les sollicitations axiales exercées sur la pièce pour la dégager de la tige se traduisent par une application radiale renforcée du mors contre cette tige mettant en oeuvre un effet d'arc-boutement.

Des pièces de fixation du genre ainsi défini sont par exemple connues par le brevet FR-A-2 699 237.

Dans les modes de réalisation de ces pièces qui ont été décrits par ledit brevet,
- chaque mors est porté par une patte flexible unique inclinée obliquement sur l'axe du collier,
- chaque mors, en sa position de travail, est disposé axialement très près d'un manchon cylindrique prolongeant axialement la portion rétrécie du collier à l'intérieur de la cage,
- et les crans de chaque mors sont des stries rectilignes qui s'étendent perpendiculairement à l'axe du collier.

De cette construction résultent plusieurs conséquences.

En premier lieu, le montage de la pièce sur la tige ne peut être effectué que dans un sens axial bien déterminé.

Or il existe des cas pour lesquels le montage doit pouvoir être indifféremment effectué dans l'un ou l'autre sens axial, les deux sens correspondant alors respectivement à deux degrés d'amovibilité différents des éléments fixés sur l'embase.

En second lieu, l'espace réservé axialement entre le mors en sa position de travail et le manchon est trop étroit pour livrer accès à une griffe de démontage et,de toute façon, une simple sollicitation axiale exercée par cette griffe sur le mors n'aurait pas permis de dégager celui-ci de la tige en raison de l'accrochage des stries du mors sur les crans de la tige.

Un démontage de la pièce, avec possibilité de réutilisation de celle-ci, est donc exclu.

En effet, la seule autre solution envisageable pour un tel démontage, qui serait un dévissage de la pièce le long du crantage de la tige, alors formé par un filetage de celle-ci, n'est pas envisageable, tout au moins tant que la pièce est solidarisée avec des éléments allongés du genre des câbles et tuyauteries.

L'invention a pour but, entre autres, de supprimer les inconvénients signalés, en rendant possibles, d'une part, un montage de la pièce selon l'un ou l'autre des deux sens axiaux et, d'autre part, un démontage axial de la pièce et sa réutilisation ultérieure.

A cet effet, les pièces de fixation du genre en question selon l'invention sont essentiellement caractérisées en ce que la face transversale, de la cage, opposée à celle formant le collier, forme un second collier rigide coaxial au premier à ouverture évasée vers l'extérieur de la cage, en ce que chaque mors est porté par deux pattes parallèles qui le relient à la paroi longitudinale correspondante de la cage, pattes qui s'étendent transversalement au repos et qui sont élastiquement flexibles chacune autour de deux axes parallèles entre eux, perpendiculaires à l'axe des colliers et constitués par des zones amincies des pattes concernées, l'ensemble des quatre axes d'articulation des pattes, considérés selon une coupe par un plan perpendiculaire à ces axes, définissant un parallélogramme élastiquement déformable, et en ce que la face crantée de chaque mors est composée de stries rectilignes qui s'étendent parallèlement à l'axe des colliers et définissent de préférence ensemble une portion de cylindre de révolution autour de cet axe.

Dans des modes de réalisation préférés, on a recours en outre à l'une et/ou à l'autre des dispositions suivantes :
- le nombre des mors est égal à deux, ces mors étant diamétralement opposés par rapport à l'axe des colliers,
- des bras venus de moulage avec la cage s'étendent obliquement à l'intérieur de cette cage de façon à porter axialement chacun contre une patte en sa position oblique de travail et à solliciter ainsi radialement le mors correspondant contre la tige crantée,
- les portions évasées des deux colliers, dont les obliquités sont toutes deux de l'ordre de 45°, s'étendent sur des distances radiales et axiales différentes.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

Les figures 1 et 2, de ces dessins, montrent schématiquement une pièce de fixation complète, à deux arceaux, établie selon l'invention, avec un goujon et son embase, ladite pièce ayant été montée sur le goujon dans un premier sens axial sur la figure 1 et étant en cours de montage dans l'autre sens axial sur la figure 2.

Les figures 3, 4, 5 et 6 montrent, en son état de repos, la cage constituant la partie centrale de la pièce ci-dessus, respectivement en vue de dessous selon la flèche III de la figure 4, en coupe axiale selon IV-IV, figure 5, en coupe transversale horizontale selon V-V, figure 4, et en coupe axiale selon VI-VI figure 5, un goujon en attente et son embase étant en outre visibles sur la figure 6.

La figure 7 est une coupe semblable à la figure 6, mais pour laquelle la cage est représentée en son état de travail, fixée sur le gougon.

La figure 8 est une vue en perspective agrandie d'un détail de ladite cage.

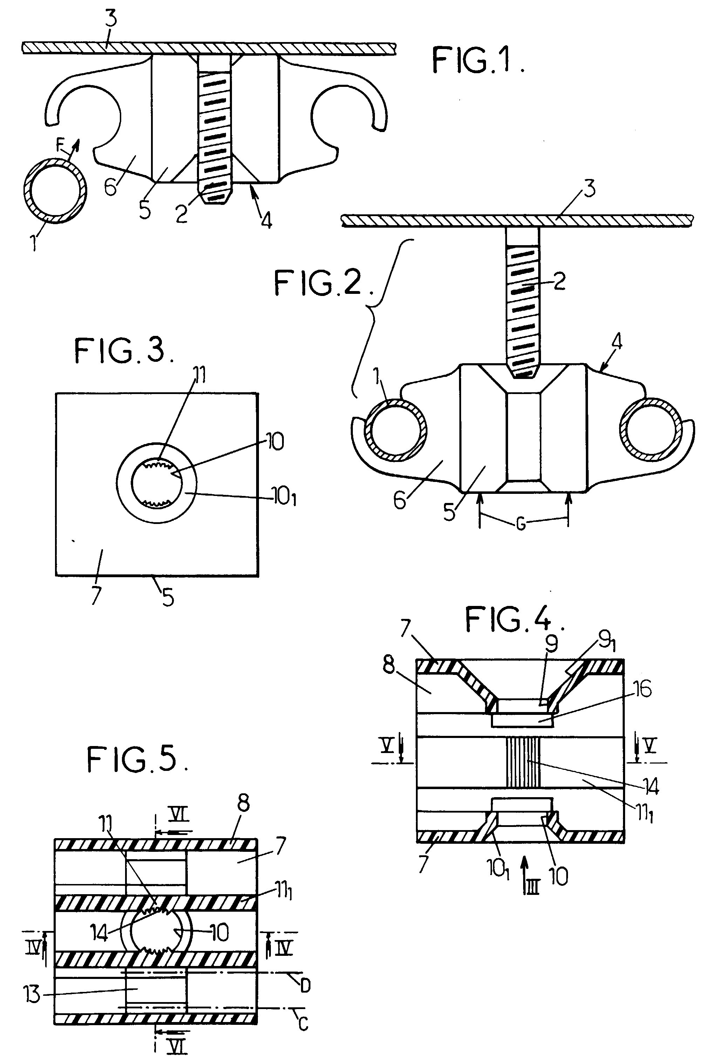

Dans l'exemple schématisé sur les figures 1 et 2, on se propose de fixer des tuyauteries 1, par exemple de carburant ou d'eau, sur des goujons crantés 2 en attente dont les pieds sont eux-mêmes fixés, notamment par soudure, sur une embase 3 constituant le dessous d'un véhicule automobile.

On a recours à cet effet à des pièces de fixation monobloc 4, venues de moulage en matière plastique et comprenant une cage centrale 5 et deux ailes 6.

La matière plastique est par exemple une résine acétal ou une superpolyamide.

Chaque aile 6 forme ici un arceau à ouverture étranglée propre à recevoir une tuyauterie 1 par introduction radiale, moyennant un élargissement élastique provisoire de sa dite ouverture.

La figure 1 correspond à un montage manuel, pour lequel la pièce 4 est mise en place axialement sur le goujon 2 avant introduction des tuyauteries 1 dans les arceaux 6, cette introduction, schématisée par la flèche F, étant effectuée ultérieurement.

La figure 2 correspond à un montage axial automatique de la pièce 4 préalablement garnie de ses tuyauteries 1, sur le goujon 2, à l'aide d'un marteau ou vérin d'agrafage exerçant sur ladite pièce des sollicitations selon les flèches G.

Comme on le voit, les deux sens de montage correspondant respectivement aux figures 1 et 2 sont inverses et il résulte de ces deux montages des degrés d'amovibilité différents pour les tuyauteries 1, le démontage de ces tuyauteries exigeant celui de la pièce de fixation 4 uniquement dans le cas de la figure 2 et non dans celui de la figure 1.

Pour ce qui est de la cage centrale 5, seule représentée sur les figures 3 à 7 dans un but de simplification, elle se présente sous la forme générale d'un petit cube ouvert latéralement, délimité extérieurement par deux parois 7 transversales, c'est-à-dire s'étendant perpendiculairement à l'axe du goujon 2, et par deux parois parallèles longitudinales 8 réunissant entre elles les deux parois transversales.

Ces dernières forment respectivement deux colliers rigides coaxiaux 9, 10 et la face cylindrique intérieure de chaque collier est raccordée à l'extérieur de la cage par une face évasée en tronc de cône 9₁, 10₁ dont l'obliquité est par exemple de l'ordre de 45°.

Ces deux colliers 9 et 10 sont destinés à être traversés axialement par le goujon 2 lors du montage et à entourer jointivement ce goujon en fin de montage dans un but de guidage relatif, les évasements 9₁ et 10₁ facilitant les introductions du goujon dans la cage pour respectivement les deux sens d'introduction.

Dans le mode de réalisation préféré illustré, les étendues respectives des deux évasements 9₁ et 10₁ sont distinctes, le plus grand évasement 9₁ étant affecté au montage automatique et l'autre au montage manuel (voir figures 1 et 2) : cette différence permet à la fois d'accepter une dispersion de centrage relativement grande pour le montage automatique, lequel est plus exigeant à ce titre que le montage manuel, et de loger le tout dans un encombrement axial global relativement petit.

La cage 5 contient deux mors 11 propres à coopérer avec le goujon cranté 2, chacun de ces mors étant porté par deux pattes transversales 12, 13 qui le relient à l'une des deux parois longitudinales 8.

Chaque patte 12, 13, qui présente la forme d'une plaquette rectangulaire, est élastiquement flexible autour de deux axes (respectivement A, B ; C, D) parallèles et transversaux, c'est-à-dire perpendiculaires à l'axe X des colliers 9 et 10.

Ces quatre axes A, B, C et D sont matérialisés par des portions rétrécies des pattes.

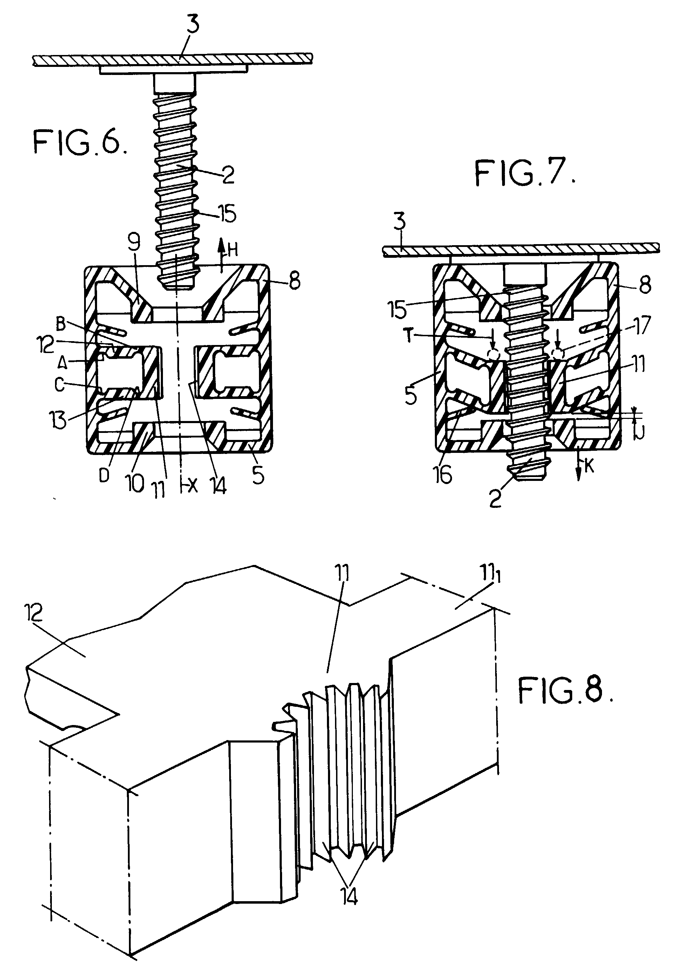

Ils sont disposés de façon telle que, en projection sur un plan perpendiculaire à eux, ils forment les quatre sommets d'un rectangle pour la position de repos de la cage (figure 6), ledit rectangle étant déformable à la façon d'un parallèlogramme ainsi que visible sur la figure 7.

Ainsi, chaque mors constitue un patin monté d'une façon flottante sur ses deux pattes et peut être repoussé élastiquement et radialement de façon à s'écarter de l'axe X, tout en demeurant parallèle à lui-même, moyennant des déplacements axiaux de petite amplitude.

Chaque patin présente en regard de l'axe X une surface en forme de tuile cylindrique de révolution centrée sur ledit axe et cette surface est définie par une pluralité de stries ou nervures 14 parallèles à cet axe, les crêtes desdites nervures se présentant notamment sous la forme d'arêtes aiguisées à profil triangulaire, ainsi que visible sur la figure 8.

On voit également sur cette figure 8, ainsi que sur la figure 5, que la largeur de chaque patin 11 comptée parallèlement aux axes d'articulation A, B, C et D, est ici supérieure à celle des pattes de liaison 12, 13, chaque patin étant ainsi prolongé latéralement par des joues plates 11₁, ce qui peut faciliter le guidage des introductions relatives du gougon dans la cage et/ou l'application de forces de démontage sur les mors (voir plus loin).

Pour la position de repos de la cage, pour laquelle le goujon 2 n'est pas introduit dans celle-ci (figure 6), les deux mors 11, qui sont diamétralement opposés par rapport à l'axe X, sont disposés en leurs positions les plus proches de cet axe, pour lesquelles le diamètre du cylindre défini par les crêtes des nervures 14 est légèrement plus petit que le diamètre extérieur des crans ou filets 15 du goujon 2.

Enfin, des bras 16 venus de moulage avec la cage 5 font saillie obliquement à l'intérieur de cette cage, à partir des parois longitudinales 8, de façon telle que leurs extrémités libres viennent élastiquement en appui contre les pattes adjacentes en position de travail, dans un but qui sera expliqué plus loin.

La mise en oeuvre de la pièce de fixation qui a été décrite ci-dessus est la suivante.

Pour monter la cage 5 sur un goujon 2 en attente, on dispose cette cage en regard de ce goujon de façon telle que l'axe X de ses colliers 9 et 10 soit confondu avec celui du goujon et on la déplace parallèlement à cet axe selon la flèche H (figure 6).

Ce déplacement relatif a pour effet d'introduire d'abord l'extrémité libre du goujon 2 dans l'un des colliers supposé ici être le collier 9, puis entre les deux mors 11.

Comme le cylindre défini par les crêtes des stries ou nervures 14 de ces mors présente au repos un diamètre plus petit que les crans 15, lesdits mors sont repoussés à la fois radialement vers l'extérieur et axialement en direction du collier 10 jusqu'à ce que les crans 15 puissent glisser le long des stries 14, lesquelles demeurent parallèles à l'axe X du fait que chacun des ensembles composés par un mors 11, une patte 12 et une patte 13 se déforme à la façon d'un parallèlogramme.

Lorsque les diamètres des deux surfaces cylindriques définies par les stries 14 et par les crans 15 sont devenus égaux, la poursuite de l'introduction du goujon 2 dans la cage 5 se traduit par un glissement relatif des crans 15 le long des stries 14 et, à la fin du montage, l'extrémité libre du goujon 2 traverse à son tour le collier 10.

Lorsque le collier 9 parvient en butée contre l'embase 3, le montage de la cage est terminé.

Il est à noter qu'alors deux des bras 16 prennent appui contre les pattes 13 en regard, ce qui sollicite élastiquement ces pattes de façon à appliquer radialement les mors 11 contre le goujon 2.

Si, après ce montage, on essaie de dégager axialement la cage du goujon selon la flèche K (figure 7), les mors 11 sont immobilisés du fait de leur application radiale contre les crans 15 du goujon 2, et la force de cet accrochage est d'autant plus élevée que la sollicitation axiale de la cage dans la direction de son dégagement est elle-même plus grande, puisque cette sollicitation tend à ramener les pattes 12 et 13 vers leur position transversale initiale, ce qui se traduit par un serrage axial des mors contre le goujon en mettant en oeuvre un phénomène d'arc-boutement.

L'accrochage de la cage sur le goujon, qui résulte de ce phénomène, est donc extrêmement solide.

Cela dit, le déplacement axial des mors 11 jusqu'en leur position de travail illustrée sur la figure 7 permet de créer, à proximité axiale immédiate de ces mors 11, du côté de l'embase 3, un espace suffisant pour livrer accès à des griffes appropriées 17 d'un outil de démontage.

Avec de telles griffes 17, il est possible d'exercer sur les mors 11, dans le sens de la flèche T, une sollicitation axiale tendant à rapprocher axialement ces mors du collier 10.

On a en effet prévu le dimensionnement de l'ensemble de façon telle qu'il subsiste un jeu axial J entre le collier 10 et les mors 11 en leur position de travail, jeu suffisant pour qu'un déplacement axial des mors 11 d'amplitude J écarte radialement lesdits mors 11 du goujon 2 d'une distance suffisante pour assurer leur désolidarisation mutuelle.

En d'autres termes, il est très facile de dégager axialement la cage du goujon sur lequel elle a été montée, par un simple déplacement axial des griffes 17 prolongé au-delà du jeu J ci-dessus explicité, sans qu'il soit besoin de faire subir à cette cage une quelconque rotation de dévissage par rapport au goujon.

Bien entendu, la cage ainsi démontée peut être ensuite réutilisée et remontée sur le même goujon ou sur un autre goujon.

Il est à noter également, et c'est là un avantage important de la présente invention, que le montage axial ci-dessus décrit de la cage 5 sur le goujon 2 peut être effectué selon l'un ou l'autre des deux sens axiaux relatifs possibles : la position transversale des pattes 12 et 13 pour la position de repos se prête à des déformations "en parallélogramme" tout à fait analogues pour les deux sens considérés.

En suite de quoi et quel que soit le mode de réalisation adopté, on dispose d'une pièce de fixation dont la constitution et la mise en oeuvre résultent suffisamment de ce qui précède.

Cette pièce présente un certain nombre d'avantages par rapport à celles antérieurement connues, en particulier les suivants :
- cette pièce peut être montée sur des goujons crantés en attente dans l'un ou l'autre sens,
- après son montage, elle peut être démontée axialement en vue de sa réutilisation.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où le mors monté flottant sur deux pattes parallèles serait unique, la cage comprenant alors, transversalement en regard de ce mors, une portée formant mors fixe et avantageusement striée de la même façon que le mors flottant.

## Revendications

1. Pièce de fixation monobloc destinée à être montée sur la tige crantée d'un goujon (2) faisant saillie sur une embase (3) en vue de fixer sur cette embase un élément approprié (1), comportant une cage (5) délimitée par deux parois transversales (7) et par deux parois latérales longitudinales (8) réunissant entre elles ces deux parois transversales, l'une de ces dernières parois, destinée à être appliquée contre l'embase, formant un collier rigide (9) à ouverture (9₁) évasée vers l'extérieur, collier destiné à entourer le pied, de la tige, proche de l'embase, ladite cage contenant au moins un mors cranté rigide (11) propre à coopérer avec les crans (15) de la tige et porté par une patte qui le relie à l'une des parois longitudinales, ladite patte étant élastiquement flexible autour d'un axe d'articulation perpendiculaire à l'axe du collier et constitué par une zone amincie de cette patte, de façon telle que les sollicitations axiales exercées sur la pièce pour la dégager de la tige se traduisent par une application radiale renforcée du mors contre cette tige mettant en oeuvre un effet d'arc-boutement, caractérisée en ce que la face transversale (7), de la cage, opposée à celle formant le collier (9), forme un second collier rigide (10) coaxial au premier à ouverture (10₁) évasée vers l'extérieur de la cage, en ce que chaque mors (11) est porté par deux pattes parallèles (12, 13) qui le relient à la paroi longitudinale correspondante (8) de la cage, pattes qui s'étendent transversalement au repos et qui sont élastiquement flexibles chacune autour de deux axes (A, B ; C, D) parallèles entre eux, perpendiculaires à l'axe (X) des colliers et constitués par des zones amincies des pattes concernées, l'ensemble des quatre axes d'articulation des pattes, considérés selon une coupe par un plan perpendiculaire à ces axes, définissant un parallélogramme élastiquement déformable, et en ce que la face crantée de chaque mors est composée de stries rectilignes (14) qui s'étendent parallèlement à l'axe des colliers et définissent de préférence ensemble une portion de cylindre de révolution autour de cet axe.

2. Pièce de fixation selon la revendication 1, caractérisée en ce que le nombre des mors (11) est égal à deux, ces mors étant diamétralement opposés par rapport à l'axe (X) des colliers (9, 10).

3. Pièce de fixation selon l'une quelconque des précédentes revendications, caractérisée en ce que des bras (16) venus de moulage avec la cage (5) s'étendent obliquement à l'intérieur de cette cage de façon à porter axialement chacun contre une patte (12, 13) en sa position oblique de travail et à solliciter ainsi radialement le mors correspondant (11) contre la tige crantée (2, 15).

4. Pièce de fixation selon l'une quelconque des précédentes revendications, caractérisée en ce que les portions évasées (9₁, 10₁) des deux colliers (9, 10), dont les obliquités sont toutes deux de l'ordre de 45°, s'étendent sur des distances radiales et axiales différentes.
